(19) Europäisches Patentamt
European Patent Office
Office européen des brevets

(11) **EP 0 809 792 B1**

(12) **EUROPÄISCHE PATENTSCHRIFT**

(45) Veröffentlichungstag und Bekanntmachung des Hinweises auf die Patenterteilung:
**12.06.2002   Patentblatt 2002/24**

(51) Int Cl.$^7$: **G01J 1/42**

(21) Anmeldenummer: **96902275.5**

(22) Anmeldetag: **14.02.1996**

(86) Internationale Anmeldenummer:
**PCT/EP96/00644**

(87) Internationale Veröffentlichungsnummer:
**WO 96/25650 (22.08.1996 Gazette 1996/38)**

(54) **EINRICHTUNG ZUR BESTIMMUNG DER UV-STRAHLUNGSSTÄRKE UND -DOSIS MITTELS UV-EMPFINDLICHER SENSOREN**

DEVICE FOR DETERMINING THE STRENGTH AND DOSE OF ULTRAVIOLET RADIATION USING SENSORS SENSITIVE TO ULTRAVIOLET RADIATION

DISPOSITIF POUR DETERMINER L'INTENSITE ET LA DOSE DU RAYONNEMENT ULTRAVIOLET A L'AIDE DE CAPTEURS SENSIBLES AUX UV

(84) Benannte Vertragsstaaten:
**AT CH DE ES FR GR IT LI PT**

(30) Priorität: **14.02.1995   DE 29502408 U**
**16.03.1995   DE 19509576**

(43) Veröffentlichungstag der Anmeldung:
**03.12.1997   Patentblatt 1997/49**

(73) Patentinhaber: **GTA Sensorik GmbH**
**17033 Neubrandenburg (DE)**

(72) Erfinder:
• **LIECKFELDT, Peter**
**D-17235 Neustrelitz (DE)**
• **HENNING, Detlev**
**D-17034 Neubrandenburg (DE)**
• **PERK, Rainer**
**D-17036 Neubrandenburg (DE)**

(74) Vertreter: **Kruspig, Volkmar, Dipl.-Ing. et al**
**Patentanwälte**
**Meissner, Bolte & Partner**
**Postfach 86 06 24**
**81633 München (DE)**

(56) Entgegenhaltungen:
**EP-A- 0 545 887          DE-U- 9 406 436**
**US-A- 4 975 584**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Einrichtung zur Bestimmung der UV-Strahlungsstärke und -dosis mittels UV-empfindlicher Sensoren gemäß Oberbegriff des Patentanspruches 1.

Aus der Deutschen Offenlegungsschrift DE 32 38 840 A1 ist eine Vorrichtung zum Messen von UV-Strahlen bekannt. Bei der dort gezeigten Vorrichtung wird eine für ultraviolettes Licht empfindliche Fotodiode verwendet, um die Strahlungsintensität ermitteln zu können. Dieser UV-Sensor wirkt mit einem spannungsgesteuerten Oszillator zusammen, wobei entsprechend einer Frequenzänderung des spannungsgesteuerten Oszillators ein Ausgangssignal erhalten wird, welches auf eine Anzeigeeinrichtung führbar ist. Dort wird also die einfallende Strahlung in ein bezüglich der Frequenz veränderliches Signal umgewandelt, wobei die Frequenzveränderung detektiert und als Meßgröße darstellbar ist. Hierdurch soll der Einsatz eines ansonsten erforderlichen Spannungsfrequenzwandlers entfallen.

Derartige frequenzgesteuerte Schaltungen unterliegen jedoch einem großen Temperatureinfluß, weisen nur eine geringe Meßgenauigkeit auf und sind daher für die exakte Bestimmung erythemwirksamer UV-Strahlung zur Vermeidung von Hautschäden nicht geeignet.

Darüber hinaus ist eine derartige Vorrichtung nicht an zentraler Stelle als übersichtliches Informationsdisplay verwendbar, da die erwähnte Meßungenauigkeit sowie die Notwendigkeit der einfallswinkelbezogenen Nachführung der Fotodiode einen solchen Einsatz ausschließen.

Aus der Deutschen Patentschrift 2 300 213 ist ein Gerät zur Messung der Strahlungsdosis von ultravioletter Strahlung bekannt, bei welchem der Strahlungsanteil im erythemerzeugenden Bereich mit einer Photozelle bestimmt werden soll. Vor dem verwendeten optisch-elektrischen Wandler sind zwei Kantenfilter angeordnet, welche spezifisch UV-durchlässig sind. Die Charakteristiken dieser Kantenfilter und des optisch-elektrischen Wandlers sind derart aufeinander abgestimmt, daß nur UV-Strahlung im erythemwirksamen Bereich erfaßt wird.

Die Schwierigkeiten bei einem derartigen Gerät bestehen darin, daß physikalische Kantenfilter nicht oder nur mit erheblichem Aufwand realisierbar sind, so daß der mechanisch konstruktive Aufwand zur Erfassung von Strahlung im erythemwirksamen Bereich zu hoch ist. Eine weitere Schwierigkeit besteht darin, daß der erforderliche Sensor bzw. der optisch-elektrische Wandler exakt zur einfallenden Strahlung ausgerichtet sein muß, wodurch der Anwendungsbereich des Gerätes eingeschränkt ist.

Die Deutsche Offenlegungsschrift DE 40 12 984 A1 zeigt ein Dosimeter zur Bestimmung der beim Sonnen im natürlichen oder künstlichen Sonnenlicht für die Menschen verträglichen Dosis an UV-Strahlung. Dieses Dosimeter besitzt einen UV-Sensor und eine Meßwertverarbeitungsschaltung, die die gesamte Strahlungsmenge bestimmt, welche mit einem einstellbaren Referenzwert vergleichbar ist und wobei das Erreichen des Referenzwertes optisch oder akustisch angezeigt wird.

Auch das in der DE 40 12 984 A1 gezeigte Gerät muß in geeigneter Position neben einer sonnenbadenden Person angeordnet sein, um die richtungsabhängig einfallende UV-Strahlung zu summieren und anzeigen zu können. Aufgrund der unterschiedlichen Einfallswinkel, insbesondere beim natürlichen Sonnenlicht, ist es erforderlich, ein derartiges Dosimeter mit einem Gelenk oder einer Gelenkstütze zu versehen, um es je nach realem Strahlungseinfallswinkel aufstellen zu können bzw. um das Gerät dem veränderten Sonnenstand nachzuführen.

Dies ist jedoch ein außerordentlicher Nachteil, insbesondere auch dann, wenn ein derartiges Gerät über einen längeren Zeitraum mit möglichst geringem Wartungs- und Einstellaufwand betrieben werden soll.

Aus dem deutschen Gebrauchsmuster G 94 06 436.9 ist eine gattungsgemäße Vorrichtung zur Bestimmung der UV-Bestrahlungsstärke und -dosis bekannt, die als einfaches, kleines und tragbares Handgerät ausgebildet ist. Das Handgerät hat jedoch den Nachteil, daß es ständig mitgeführt werden muß und energieverbrauchsseitig auf Batterien oder Akkumulatoren angewiesen ist.

Bei der US 4,975,584 wird von einer Vorrichtung zum Messen, Verarbeiten und Anzeigen ultravioletter Strahlung ausgegangen, wobei dort eine Vielzahl von Sensorstationen vorgesehen ist, die jeweils kugelförmige Sensorköpfe aufweisen. Die dezentral erfaßten Daten werden mittels Telemetrie einer Zentralstation übermittelt, welche wiederum telemetrisch mit Anzeigeeinrichtungen in Verbindung steht. Es sind also dort die eigentlichen UV-Sensoren räumlich von den Anzeigeeinrichtungen getrennt angeordnet, wodurch sich das Problem ergibt, daß Unterschiede in der tatsächlichen UV-Belastung zwischen Meß und Anzeigeort nicht berücksichtigt werden können.

Es ist daher Aufgabe der Erfindung, eine Einrichtung zur Bestimmung der UV-Strahlungsstärke und -dosis mittels UV-Sensoren anzugeben, welche zum einen strahlungswinkelunabhängig eine optimale Erfassung der Bestrahlungsstärke und -dosis ermöglicht und die zum anderen in übersichtlicher Weise eine aktuelle Messung und Anzeige tatsächlich erythemwirksamer Solar-UV-Strahlung gestattet.

Die Lösung der Aufgabe der Erfindung erfolgt mit einem Gegenstand gemäß den Merkmalen des Patentanspruches 1, wobei die abhängigen Ansprüche zweckmäßige Ausgestaltungen und Weiterbildungen des Anspruches 1 umfassen.

Eine spezielle Anordnung von UV-Sensordioden ermöglicht es den einfallenden Lichtstrom als vektorielle Größe aufzufassen,

wobei die von den Dioden aufgenommene Lichtmenge dem Anteil des Lichtstromes in der X-, Y- bzw. Z-Richtung des erwähnten Koordinatensystems entspricht. Hieraus sind die Komponenten des Vektors des Lichtstromes bestimmbar und es kann demnach der Betrag des Lichtstromes bzw. der einfallenden Strahlung ermittelt werden. Unter Verwendung eines Mikroprozessors wird dann die tatsächlich erythemwirksame Strahlung ermittelt und einer Anzeigeeinrichtung zugeführt. Der Mikroprozessor steht mit einem Speicher in Verbindung, welcher Look-Up-Tabellen zur numerischen Kalibrierung sowie ein Steuerprogramm zur Bewertung der Ausgangssignale der UV-Dioden enthält.

Die tatsächliche Zuordnung und Kalibrierung der Sensorausgangssignale zur erythemwirksamen UV-Strahlung erfolgt numerisch mittels einer Approximationsfunktion oder derart, daß eine Funktion erythemwirksamer UV-Strahlung in Abhängigkeit von dem jeweiligen Sensorsignal in Form einer in der Look-Up-Tabelle gespeicherten Menge von Wertepaaren gebildet wird,

wobei die Menge von Wertepaaren der Lösung des bzw. der Integrale für das jeweilige Sensorsignal und der erythemwirksamen Strahlung für eine Vielzahl von möglichen terrestrischen Bestrahlungsstärken entspricht, und wobei nach einer derartigen Kalibrierung in Einheiten die erythemwirksame UV-Strahlung durch zeitliche Integration die Bestrahlungsstärke oder -dosis ermittelbar ist. Erfindungsgemäß wird zur indirekten Bestimmung der atmosphärischen Trübungsanteile eine weitere, im Spektralbereich >340 nm sensitive Diode eingesetzt.

Beim Überschreiten einer vorgegebenen Bestrahlungsstärke oder - dosis ist ein Warnsignal auslösbar.

Die ermittelten UV-B-Strahlungsbelastungen werden auf Einheiten einer als verbindlich normierten Meßgröße, nämlich dem Sonnenbrand- oder UV-Index umgerechnet und auf einem Großdisplay zur Anzeige gebracht. Darüber hinaus ist die Einrichtung in der Lage eine Tendenzanzeige in analoger oder digitaler Art anzugeben, um betreffenden Personen, die sich im Einzugsbereich der Einrichtung befinden, Hinweise über eine verträgliche Sonnenbelastung oder das Auftragen von Sonnenschutzcremes auf unbedeckte Körperstellen zu geben.

Gemäß einer Ausführungsform wird anstelle oder in Ergänzung einer analogen oder digitalen Anzeige schwellwertabhängig das Erreichen oder Überschreiten eines Grenzwertes durch farblich abgestimmte, optische Signale angezeigt.

Die erwähnte Tendenzanzeige wirkt vorteilhafterweise mit einer Einrichtung zur Berücksichtigung des Tagesganges der UV-B-Strahlung zusammen, so daß eine exakte und fundierte Vorhersage der Strahlungsbelastung in den folgenden Zeitabschnitten vorgegeben ist.

Die Anzeigeeinheit ist erfindungsgemäß als elektronische Anzeigetafel ausbildbar, so daß in größeren Entfernungen beispielsweise bis zu 100 Metern die angezeigten Meßgrößen oder Tendenzen ablesbar sind.

Gemäß einem weiteren Merkmal wird die zur Versorgung der Einrichtung erforderliche elektrische Energie autark über Solarzellen bereitgestellt, so daß ohne das aufwendige Verlegen von elektrischen Anschlüssen und Kabeln die Betriebsfähigkeit an beliebigen Orten im Freien gewährleistet ist.

Es liegt im Sinne der Erfindung alternierend oder gleichzeitig mit der Anzeige des erwähnten Sonnenbrand- oder UV-Index zur Darstellung der UV-B-Strahlungsbelastung eine Zeitanzeige, eine Anzeige der Lufttemperatur oder weiterer relevanter Größen vorzusehen.

In einer weiteren Ausführungsform steht die erfindungsgemäße Einrichtung über ein Telemetriesystem mit einem Wassertemperatursensor in Verbindung und ist in der Lage, die telemetrisch übertragene Wassertemperatur ebenfalls zur Anzeige zu bringen. Dies ist besonders dann vorteilhaft, wenn die erfindungsgemäße Einrichtung an Badeständen oder dergleichen aufgestellt ist.

Alternativ oder ergänzend ist die Anordnung eines Ozonsensors in der Einrichtung vorgesehen, so daß örtlich aktuelle Ozonwerte bestimmt und angezeigt werden können.

Die Einrichtung findet Verwendung zur Anzeige und Information über die wirksame Strahlungsbelastung in Strand- und Kurbädern, Kurhotels, Kurkliniken, Wintersportorten, insbesondere in größeren Höhenlagen, auf Kreuzfahrtschiffen und dergleichen.

Die Einrichtung ist mit Hilfe eines Mikrorechners in der Lage, interaktiv mit einem Benutzer zu kommunizieren, wobei der Benutzer über eine Eingabe des Hauttypes und/oder bereits verwendeter Sonnenschutzmittel eine individuelle Anzeige und Information darüber erhält, wie lange ohne zu erwartende Schädigungen das Fortsetzen oder Ausführen eines Sonnenbades unter den jeweiligen örtlichen Bedingungen empfohlen wird. Damit ist sichergestellt, daß in Abhängigkeit vom jeweiligen Hauttyp Schädigungen, nämlich Sonnenbrand an den der Sonne ausgesetzten Hautpartien vermieden wird.

Die Einrichtung ist intern mit einer vorprogrammierten Auswertung und Festlegung von Sonnenbrand- bzw. UV-Index auf der Basis unterschiedlicher klassifizierter Hauttypen versehen. In einer Grundausführung ist die Einrichtung auf den Hauttyp II, dem sogenannten hellhäutigen, europäischen Typ mit Sonnenbrandempfindlichkeit und mäßiger Bräunung voreingestellt. Dieser Hauttyp bildet die Bewertungsgrundlage für den erwähnten Sonnenbrandindex.

Die Einrichtung vereint einen speziellen Sensorkopf mit UV-empfindlichen Sensoren, mit dessen Hilfe einfallswinkelunabhängig die jeweils vorliegende Strahlungsbelastung ermittelbar ist sowie ein Mikrorechnersystem, das tatsächlich erythemwirksame Strahlungsanteile berechnet. Weiterhin erfolgt die Anzeige der Strahlungsbelastung in Form einer allgemein verständlichen Bewertungsgröße beispielsweise dem Sonnenbrandindex (SBI) bzw. dem UV-Index über ein Großdisplay.

Ergänzend verfügt die Einrichtung, welche als Informationsstation durch Solarzellenbetrieb autark an den verschiedensten Orten einsetzbar ist, über eine interaktive Bedieneinheit, so daß im Dialogbetrieb nach Angabe von Hauttyp, einer möglicherweise gegebenen Vorbräunung und bereits angewendeten Sonnenschutzmitteln für die jeweilige Person konkrete Empfehlungen zum Sonnenaufenthalt anzeigbar sind.

Durch die Berücksichtigung des Tagesganges der erythemwirksamen UV-B-Strahlung kann mit der Einrichtung eine exakte Vorhersage der Belastung für die folgenden Stunden im Sinne einer empfohlenen Aufenthaltsdauer in der Sonne ermittelt werden.

Dadurch, daß mit der Einrichtung im Gegensatz zu bekannten Lösungen ein Vorbräunungszustand der Haut ebenfalls berücksichtigt werden kann, ist eine dermatologisch fundierte Anzeige und Bräunungsempfehlung bzw. Empfehlung für das Sonnenbad gewährleistet.

Erfindungsgemäß erfolgt der konstruktive Aufbau der Einrichtung in Säulenform, wobei die Komponenten Steuerrechner, Anzeige, Tastatur, Eingabeschnittstelle, Drucker, Stromversorgung in einem Standgehäuse in Säulenform untergebracht sind.

Der Sensorkopf wird freistehend im oberen Bereich oder als Fortsatz des Standgehäuses so angeordnet, daß schattenfrei einfallende UV-Strahlung bestimmt werden kann und daß Beschädigungen, insbesondere mutwilliger Art ausgeschlossen sind.

Die Erfindung soll nachstehend anhand von Ausführungsbeispielen sowie unter Zuhilfenahme von Figuren näher erläutert werden. Hierbei zeigen:

Fig. 1 eine Darstellung zur Erläuterung der Anordnung der UV-empfindlichen Sensoren bzw. Dioden im Sensorkopf mit dem Ziel der Bestimmung der Bestrahlungsstärke unabhängig vom Einfallswinkel der Strahlung;

Fig. 2 ein Blockschaltbild der wesentlichen Funktionsgruppen der Einrichtung;

Fig. 3 verschiedene Seitenansichten der Einrichtung in einem Stand- bzw. Säulengehäuse; und

Fig. 4a,b Detaildarstellungen von Ausführungsformen des Sensorkopfes.

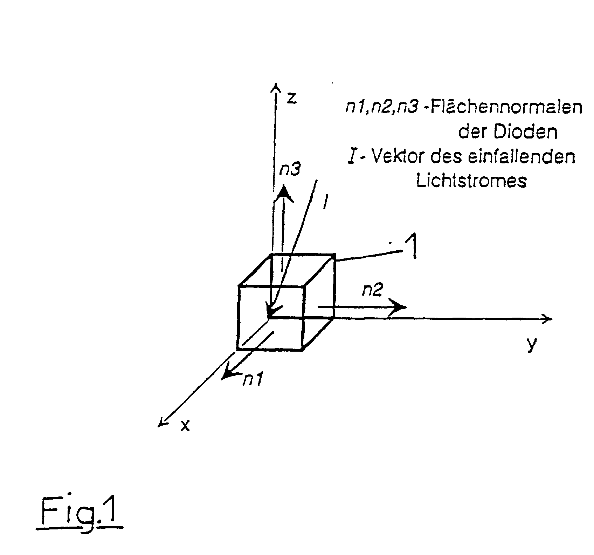

Gemäß Fig. 1 befinden sich die Dioden des Sensorkopfes jeweils an gegenüberliegender Position auf den Seitenflächen des beispielhaft gezeigten Quaders 1.

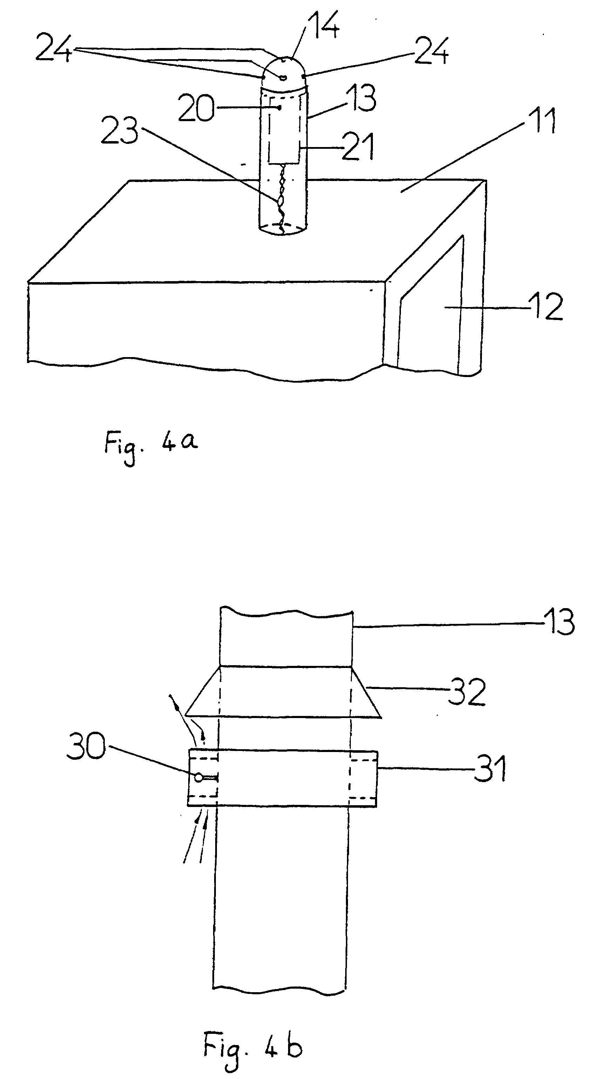

Der einfallende Lichtstrom, welcher als vektorielle Größe aufgefaßt wird, ist mit I gekennzeichnet. Die UV-Dioden (in Fig. 4a Bezugszeichen 24) sind so angeordnet, daß die Flächennormalen der Diodenoberflächen ein rechtwinkliges Koordinatensystem X, Y und Z aufspannen. Diese Seitenflächen des Quaders sind so gerichtet, daß ihre Flächennormalen zu den Einheitsvektoren parallel sind. Die Flächennormalen der Dioden sind mit n1, n2 und n3 symbolisiert.

Wie aus der Fig. 1 erkennbar, entspricht die von den Dioden, deren Flächen die Flächennormalen n1, n2 und n3 besitzen, aufgenommenen Lichtmenge dem Anteil des Licht- bzw. Strahlungsstromes in der X-, Y- bzw. Z-Richtung.

Hieraus sind die Komponenten des Vektors des Licht- bzw. Strahlungsstromes bekannt, und es ist der Betrag des Lichtstromes bzw. der einfallenden Strahlung durch eine entsprechende Auswerteelektronik bestimmbar. Durch die gezeigte quader- oder würfelförmige Anordnung der UV-Dioden im Sensorkopf werden außer der Diode, die parallel zur X-Y-Ebene angeordnet ist, je nach Strahlungseinfallswinkel nur eine bis maximal zwei weitere Dioden beleuchtet und liefern ein Meßsignal.

Zum Ausschalten von Meßfehlern aufgrund diffuser Strahlungsreflexion werden die Ausgangssignale der Dioden durch einen Steuerrechner bewertet. Hierbei werden nur die Dioden zur Berechnung der Bestrahlungsstärke herangezogen, welche tatsächlich bezogen auf den Vektor des einfallenden Lichtstromes bzw. Lichtstrahlungsstromes relevant sind.

Alternativ ist es möglich, einen Streustrahlungsanteil aus den Ausgangssignalen der Dioden durch Berücksichtigung der Verhältnisse der Ausgangssignale der Dioden untereinander zu ermitteln. Ein Mittelwert der nicht direkt bestrahlten Dioden wird gebildet und zur Erfassung der gesamten Strahlungsbelastung zum Wert der direkten Strahlung addiert.

In einem weiteren Ausführungsbeispiel besteht die Möglichkeit, die Mittelwertbildung in kontinuierlichen Abständen zu wiederholen und die erhaltene Streustrahlung prozentual zu quantifizieren, um in einem vereinfachten Verfahren einen jeweils angenommenen prozentualen Streustrahlungsanteil bei der Ermittlung der gesamten einfallenden Strahlung zu berücksichtigen.

Dies ist insbesondere dann von Vorteil, wenn die Einrichtung zur Bestimmung der UV-Strahlungsstärke und -dosis an Orten verwendet wird, bei denen mit einem hohen Streustrahlungsanteil, z.B. auf Kreuzfahrtschiffen, Skigebieten oder an Badestränden mit der Kombination von reflektierendem Sand und Wasser, zu rechnen ist.

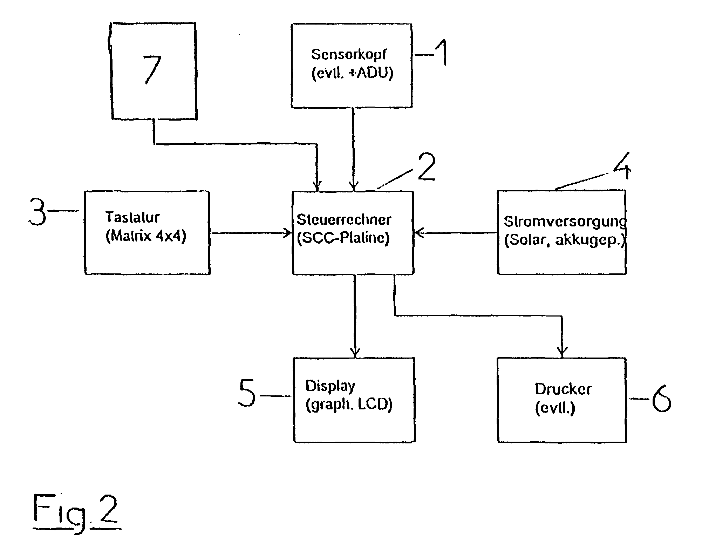

Die Fig. 2 zeigt in einem Blockschaltbild die wesentlichen Funktionsgruppen der Einrichtung zur Bestimmung der UV-Strahlungsstärke und -dosis.

Die Einrichtung besteht aus dem bereits erwähnten Sensorkopf 1, der gegebenenfalls in einer Signalvorverarbeitungsbaugruppe einen Analog-Digital-Umsetzer aufweist.

Der Sensorkopf 1 steht mit einem Steuerrechner 2, welcher auch ein Signalprozessor sein kann, in Verbindung. Eine Tastatur 3 zur Eingabe von Daten und zur interaktiven Kommunikation wirkt mit dem Steuerrechner 2 zusammen. Die Stromversorgung des Steuerrechners 2 erfolgt über eine Stromversorgungsbaugruppe 4, die Solarzellen aufweist, wobei die Solarzellen zum Puffern von Akkumulatoren dienen. Optional ist der Steuerrechner 2 über eine Druckerschnittstelle mit einem Drucker 6 verbunden. Über einen Anzeigetreiber, welcher gegebenenfalls auf der Platine des Steuerrechners 2 angeordnet ist, wird ein großflächiges Display 5 angesteuert.

Mittels eines weiteren Einganges werden zusätzliche Sensoren, gegebenenfalls multiplex, abgetastet. Diese zusätzlichen Sensoren sind mit den Bezugszeichen 7 symbolisch dargestellt und können der Erfassung von Ozonwerten, der Lufttemperatur oder der Wassertemperatur dienen.

Die Erfassung der Wassertemperatur kann telemetrisch erfolgen, wobei ein Telemetriesender im zu vermessenden Gewässer vorhanden ist und der Telemetrieempfänger im oder in der Nähe des Sensorkopfes 1 bzw. der weiteren Sensoren 7 einschließlich einer entsprechenden Antenne angeordnet ist.

Mittels des Sensorkopfes 1 wird im Zusammenwirken mit dem Steuerrechner 2 die aktuelle UV-Bestrahlungsstärke erythemwirksam gemessen bzw. berechnet und mittels des Display 6 zur Anzeige gebracht. Innerhalb des Steuerrechners 2 ist ein nicht gezeigter Speicher angeordnet, der ein internes Steuerprogramm sowie Look-Up-Tabellen zur numerischen Kalibrierung der Ausgangssignale der verwendeten Dioden des Sensorkopfes enthält.

Zweckmäßigerweise wird der von den Dioden kommende Photostrom durch Stromspannungswandler in eine proportionale Spannung umgesetzt, wobei diese Spannung analog-digital gewandelt wird. Beispielhaft können dann aus allen Spannungswerten die zwei größten Werte bestimmt und zur weiteren Verarbeitung herangezogen werden.

Diese beiden größten Werte werden dann quadriert und die Quadrate addiert. Aus der Summe wird die Quadratwurzel gezogen, wobei der dann erhaltene Wert dem Photostrom entspricht, den eine Diode bei gleicher Beleuchtungsstärke liefern würde, wenn der Vektor der Beleuchtungsstärke senkrecht auf die Beleuchtungsfläche der Diode trifft.

Sollten keine oder nur unter einem Schwellwert liegende Spannungswerte weiterer Dioden vorliegen, befindet sich die Strahlungsquelle, nämlich die Sonne, senkrecht über dem Sensorkopf 1. Mittels eines speziellen Kalibrierungsverfahrens unter Rückgriff auf die Wechselwirkung zwischen dem Steuerrechner und dem im Inneren angeordneten Speicher sowie durch das Auswerten der aktuellen Photoströme ist eine Zuordnung der Dioden bzw. der Sensorausgangssignale zu handhabbaren Einheiten des erythemwirksamen UV-Strahlungsanteiles und zur Umrechnung auf den Sonnenbrand- bzw. UV-Index möglich.

Wie dargelegt, besitzen die im Sensorkopf 1 verwendeten Dioden jeweils gleiche Empfindlichkeit, wobei diese Empfindlichkeit vom Eingangswinkel vorzugsweise einer Kosinus- oder Kosinus-Quadrat-Funktion entspricht. Die Anordnung der Dioden weist keine wesentliche Winkelabweichung auf, so daß der Sensor nicht mehr nachgeführt werden muß, um eine exakte Messung zu gewährleisten.

Der einfallende Lichtstrom wird, wie erläutert, als vektorielle Größe aufgefaßt, wobei die von den Dioden aufgenommene Lichtmenge dem Anteil des Lichtstromes in der X-, Y- bzw. Z-Richtung des gewählten Koordinatensystems entspricht. Hieraus sind die Komponenten des Vektors des Licht- bzw. Strahlungsstromes bestimmbar und es kann der Betrag des Lichtstromes bzw. der Strahlung ermittelt werden.

Je nach Lage des Sensorkopfes werden in Abhängigkeit des Strahlungseinfallswinkels eine bis drei Dioden beleuchtet. Diese beleuchteten Dioden liefern das erwähnte Sensorausgangssignal zur Berechnung der Beleuchtungsstärke mittels des Steuerrechners.

Für die Kalibrierung wird von folgendem Sachverhalt ausgegangen.

Bekanntermaßen verläuft die spektrale Responsefunktion $R(\lambda)$ einer Diode über die Wellenlänge nicht linear. Fällt auf einen Sensor wie beschrieben senkrecht die spektrale Strahlungsflußdichte $E(\lambda)$ ein, so ergibt sich daher ebenfalls ein nicht-linearer Zusammenhang bezogen auf die betreffende Wellenlänge.

Es ergibt sich demnach der jeweilige Sensorsignalausgangsstrom nach folgender Beziehung:

$$I = A_E^2 \int_0^\infty E(\lambda) * R(\lambda) * d(\lambda)$$

mit $A_E$ = Sensorfläche.

Aufgrund der Tatsache, daß die verwendeten Sensoren, insbesondere die UV-Dioden die Responsefunktion wie oben genannt besitzen, die im übrigen nicht identisch mit der Wirkungsfunktion des UV-Erythems ist, wird eine Kalibrierung vorgenommen, um eine entsprechende Zuordnung der erythemwirksamen Strahlung zum jeweiligen Diodenausgangsstrom herzustellen.

Diese Kalibrierung erfolgt mit einer Aufstellung eines funktionalen Zusammenhanges zwischen der erythemwirksamen UV-Strahlung als Funktion des Diodenstromes in Form einer Menge von Wertepaaren, die wiederum numerisch ermittelt werden.

Hierfür werden Integrale für den Diodenstrom I und ihre erythemwirksame UV-Strahlungsflußdichte für eine Vielzahl möglicher terrestrischer Strahlungsstärken direkt gelöst und in der Look-Up-Tabelle im Speicher des Steuerrechners bzw. Signalprozessors abgelegt.

Alternativ kann eine vorab bestimmte Kalibrierungsfunktion durch ein Polynom n-ten Grades mit z. B. n=2 approximiert werden und die Approximationsfunktion zur Bestimmung des erythemwirksamen UV-Strahlungsanteils genutzt werden. Ebenso wird, gemäß dem gezeigten Ausführungsbeispiel die terrestrische Strahlungsstärke für den atmosphärischen Zustand, die exterrestrische Bestrahlungsstärke und die atmosphärische Transmission bei bestimmten Zuständen berücksichtigt. Aus den vorgenannten Größen wird die endgültige Kalibrierungsfunktion bestimmt, die zur exakten Berücksichtigung des tatsächlich erythemwirksamen Strahlungsanteils herangezogen wird.

Die beschriebene Verfahrensweise ermöglicht es also reale Abweichungen der Sensorresponsefunktion von der Responsefunktion des eigentlichen Strahlungstargets, z. B. der Hautoberfläche, zu berücksichtigen.

Um die Kalibrierung auf absolute Einheiten der Bestrahlungsstärke integral im interessierenden Wellenlängenbereich von 280 bis 400 nm zu verbessern, wird vorgeschlagen, eine zusätzliche, UV-empfindliche Photodiode am Sensor anzuordnen, welche nur im Spektralbereich > 340 nm sensitiv ist. Hierdurch werden Einflüsse durch geänderte Ozonkonzentration in der Stratosphäre ausgeschlossen, da diese nur im kurzwelligen Teil von ca. 290 bis 340 nm wirkt. Eine derartige, UV-empfindliche Diode kann beispielsweise dadurch gebildet werden, daß eine bekannte Diode mit einer Abdeckung aus einem Filterglas versehen wird, welches eine Absorptionskante im UV-A-Bereich aufweist. Zweckmäßigerweise wird die UV-Photodiode in Zenitrichtung angeordnet. Bei cos- bzw. $\cos^2$-Charakteristik der UV-Diode erfolgt die Korrektur auf Basis der Einfallswinkelbestimmung mittels des beschriebenen Verfahrens.

Die UV-Diode mißt in dem Bereich, in dem, wie dargelegt, die Absorption durch Ozon zu vernachlässigen ist, d.h. es ergibt sich die terrestrische Bestrahlungsstärke durch Integration aus dem bekannten extraterristrischen Spektren minus bekannter Rayleigh-Streuung abzüglich der unbekannten atmosphärischen Trübung. Durch die Anordnung einer zusätzlichen UV-Diode, die schmalbandig und selektiv in einem absorptionsbandenfreien Abschnitt des Spektrums Trübungsanteile indirekt bestimmt, kann der Kalibrierungsvorgang optimiert werden, wodurch sich insgesamt die Meßgenauigkeit der Anordnung erhöht. Es sei angemerkt, daß die Trübungseinflüsse sehr stark zwischen äußerst klarer, z.B. polaren Luftmassen, und starker Eintrübung, z.B. bei subtropischer Luftmasse, auch bei Sonnenschein, variieren.

Für die Kalibrierung wird dann, wie bereits vorgestellt, die Simulation relevanter Trübungsfaktoren unter Rückgriff auf die Look-up-Tabelle vorgenommen, anschließend erfolgt ein Koeffizientenvergleich unter Berücksichtigung der Meßwerte einerseits und der simulierten Werte aus der Look-up-Tabelle, woraus dann ein Schätzwert für die aktuelle Trübung bestimmt wird.

Die laufenden Messungen erfolgen in der beschriebenen Weise einschließlich der laufenden Simulation der atmosphärischen Transmission, wobei durch den meßtechnisch fundierten Schätzwert für die Trübung Unsicherheiten hinsichtlich der Variationen in der ermittelten Bestrahlungsstärke reduziert werden. Diese Variationen können nämlich von der Trübung und/oder der Ozonverteilung verursacht sein. Durch Bestimmung der Trübungsanteile und unter Berücksichtigung der Meßwerte kann, zumindest indirekt, auswerteseitig auf Veränderungen beim integralen Ozongehalt der Stratosphäre geschlossen werden.

Hinsichtlich der Ausbildung des Sensorkopfes wird darauf hingewiesen, daß z.B. bei stationärem Einsatz auch nur mit einer einzigen Diode im Sensorkopf gearbeitet werden kann, da durch die bekannte geographische Lage und der bekannten Uhrzeit der Sonnenstand errechnet werden kann, um entsprechende Einfallswinkelkorrekturen vornehmen zu können. Allerdings ergeben sich dann Probleme bei der Bestimmung des Einflusses der Streustrahlung, die bis zu 20 % der direkten Strahlung betragen kann.

Nachdem die Kalibrierung in Einheiten der erythemwirksamen UV-Strahlung vorgenommen wurde, kann im Ergebnis zeitlicher Integration die Bestrahlungsstärke ermittelt und das Überschreiten von vorgebbaren Sollwerten überwacht und eine optische und/oder akustische Alarmfunktion ausgelöst werden. Zweckmäßigerweise erfolgt die Überwachung der Bestrahlungsstärke unter laufender zeitlicher Integration mit Hilfe des Steuerrechners und unter Berücksichtigung von mittels der Tastatur 3 eingebbaren spezifischen Hauttypen und Sonnenschutzfaktoren aufgetragener Hautcremes interaktiv, so daß benutzerspezifische Daten ermittelbar sind.

Demnach kann der Vorbräunungszustand der Haut mitberücksichtigt werden, wodurch dermatologisch fundierter eine Vorhersage der effektiven Sonnenbadedauer erfolgen kann.

Zusätzlich ist mittels dieses Steuerrechners und einem weiteren Speicher der Tagesgang der erythemwirksamen UV-B-Strahlung aufzeichenbar, wodurch für nachfolgende Tage oder Zeitabschnitte Vorhersageparameter abgeleitet werden können. Letztlich wird mittels des Steuerrechners nicht nur eine rechnerische Vorhersage über den weiteren Tagesverlauf der UV-Strahlungsstärke in Abhängigkeit von der Tageszeit angegeben, sondern es wird eine Anzeige der konkreten Strahlungsbelastung umgerechnet in Einheiten des Sonnenbrand- oder UV-In vorgenommen, so daß in verständlicher Form benutzerrelevante Informationen auf der Basis des statistischen Tagesganges ausgegeben werden Können.

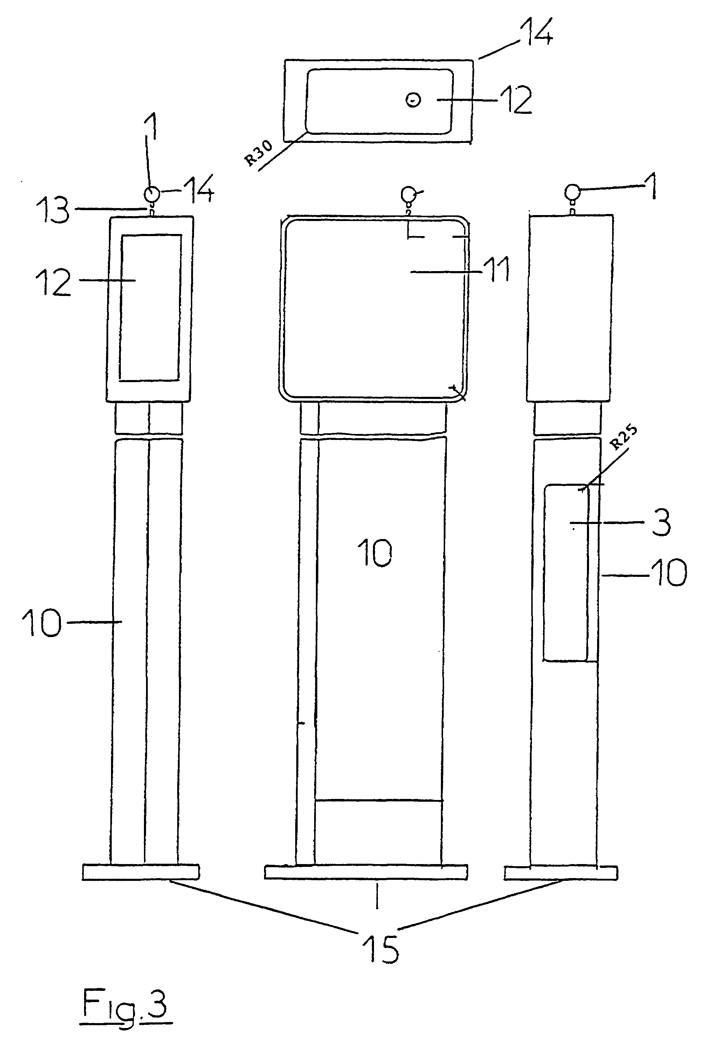

Die Fig. 3 zeigt nun in verschiedenen Seitenansichten die prinzipielle Gehäusegestaltung der Einrichtung. Im Standfuß 10 befindet sich in einem seitlichen Abschnitt die Tastatur 3 mit einem nicht gezeigten alphanumerischen Display zum Erleichtern der Dialogführung bei der interaktiven Bedienung der Einrichtung. Darüber hinaus kann im Bereich der Tastatur 3 ein Ausgabefach für gedruckte Informationen, z. B. den Tagesverlauf oder individuelle Daten für das Sonnenbad des jeweiligen Nutzers vorgesehen sein.

Der Standfuß 10 ist entweder säulenförmig oder mit einem rechteckigen Querschnitt ausgeführt.

Beim gewählten Beispiel liegt die Höhe des Standfußes im Bereich von ca. 2 m. Oberhalb des Standfußes ist ein Displaygehäuse 11 mit rechteckigem oder quadratischem Querschnitt montiert.

Dieses Displaygehäuse 11 weist mindestens eine in Sektoren aufgeteilte Fläche zur Informationsausgabe mittels alphanumerischer Darstellung auf.

Derartige Großdisplays sind bekannt und brauchen hier nicht näher erläutert werden.

Zweckmäßigerweise besitzt das Großdisplaygehäuse 11 an oder auf seiner Oberseite und/oder Seitenflächen eine Solarzellenfläche 12. Mit Hilfe dieser Solarzellenflächen 12 erfolgt die Energieversorgung der Einrichtung bzw. das Nachladen von in dem Standfuß 10 angeordneten Akkumulatoren, so daß eine weitgehend autarke Betriebsweise der gezeigten Einrichtung gewährleistet ist.

Ausgehend von der oberen Fläche des Displaygehäuses 11 befindet sich an einem rohrförmigen Fortsatz 13 der Sensorkopf 1, welcher aus einer Anordnung von UV-empfindlichen Dioden auf einem Trägerquader besteht. Der Sensorkopf 1 ist mit einem UVdurchlässigen, zweckmäßigerweise kugelförmigen Gehäuse 14 umgeben. Durch die freistehende, vom Displaygehäuse wegführende Anordnung des Sensorkopfes 1 mit entsprechender Umhüllung ist eine Beschädigung oder mutwillige Zerstörung weitgehend ausgeschlossen und es wird der Einfluß von Reflexionen durch die Solarzellenfläche oder anderer mechanisch konstruktiver Bestandteile der Einrichtung reduziert.

Die Einrichtung kann über eine großflächige Standplatte 15 verfügen, welche gegebenenfalls mit Transportrollen versehen ist, um die Einrichtung, z. B. in Kurkliniken bei entsprechendem Sonnenschein auf eine Sonnenterrasse oder dergleichen stellen zu können, ohne eine feste Verankerung vorsehen zu müssen.

Mit den Fig. 4a und b sollen weitere Ausführungsbeispiele bzw. Ausführungsformen des Sensorkopfes 1 erläutert werden.

Im Falle der Fig. 4a ist das rohrförmige Verbindungsstück 13 gezeigt, an dessen oberen Ende sich ein Einsatzstück 20 befindet.

Das Einsatzstück 20 ist ein integrales Bauteil, welches am oberen Ende ein. Halbkugel- oder ellipsoides Gehäuses 14 aufweist, in dessen Gehäusewandung die UV-empfindlichen Dioden 24 über den Umfang verteilt sowie zur Spitze weisend angeordnet sind.

Das integrale Bauteil 20 in Form eines Einsatzstückes besitzt z.B. ein Gewinde, um ein Befestigen im rohrförmigen Verbindungsstück 13 zu gewährleisten.

Am unteren Ende des Bauteiles 20 ist eine Leiterplatte 21 mit einer Signalvorverarbeitungselektronik angeordnet. Die Leiterplatte 21 weist Anschlüsse zur Aufnahme eines Verbindungskabels 23 auf. Das Verbindungskabel 23 ist in das Innere des Großdisplaygehäuses 11 zu weiteren elektronischen Komponenten geführt.

Bei dem gezeigten Ausführungsbeispiel kann das Bauteil 20, enthaltend den eigentlichen Sensor mit Dioden 24 und eine Signalvorverarbeitungselektronik auf der Leiterplatte 21 in einfacher Weise demontiert und kontrolliert, oder ausgetauscht werden, ohne daß ein Öffnen des Großdisplaygehäuses 11 erforderlich ist. Hierdurch erhöht sich die Servicefreundlichkeit der gesamten Einrichtung. Darüber hinaus ist durch die gewählte halbkugelige oder ellipsoide Gehäuseform des Gehäuses 14 eine Verschmutzung mit Nachteilen hinsichtlich der Meßgenauigkeit der Einrichtung reduziert.

Die Fig. 4b zeigt in einem weiteren Ausführungsbeispiel die Anordnung eines Referenztemperatursensors 30 am rohrförmigen Verbindungsstück 13. Der Temperatursensor 30 befindet sich innerhalb eines koaxial das rohrförmige Verbindungsstück 13 umgreifenden Rohrsegmentes 31, welches mindestens im Bereich der Anordnung des Temperatursensors 30 unten und oben offen ist, so daß Umgebungsluft (Pfeildarstellung) am Sensor vorbeistreichen kann, jedoch eine direkte Sonneneinstrahlung auf den Temperatursensor 30 verhindert wird.

Das Rohrsegment 31 wirkt also als Schattenkragen und Witterungsschutz für den Temperatursensor 30.

Oberhalb des Rohrsegmentes 31 oder einen integralen Bestandteil desselben bildend, ist eine umlaufende Witterungsschutzkappe 32 angeordnet, die im wesentlichen eine Hutdachform aufweist. Die Witterungsschutzkappe 32 kann seitlich so weit heruntergezogen sein, daß sich eine zusätzliche Schattenwirkung bezogen auf das Rohrsegment 31 bzw. den Temperatursensor 30 ergibt.

Mittels der Erfassung einer Referenztemperatur kann gemäß einem Ausführungsbeispiel auf den Tagesverlauf bzw. den Tag-Nacht-Zyklus geschlossen werden und eine diskrete Darstellung der Temperatur mittels des Großdisplays erfolgen.

Es sei an dieser Stelle angemerkt, daß es im Sinne der Erfindung liegt, die konstruktive Ausführungsform, insbesondere die Anordnung und Ausführung des Displays sowie die Montage des Sensorkopfes in vielfältiger Weise abzuändern, ohne den Grundgedanken der Erfindung zu verlassen.

Alles in allem gelingt es mit der vorgeschlagenen Einrichtung, die bodennahe ultraviolette Strahlung der Sonne in Abhängigkeit von der geographischen Lage sowie der Jahres- und Tageszeit sowie der Bewölkung, Bodenreflexion und dergleichen zu ermitteln.

Mittels der Einrichtung kann unter Berücksichtigung des Sonnenbrand- oder UV-Index eine effektive Anzeige unter Berücksichtigung der Empfindlichkeiten der menschlichen Haut bezüglich der UV-Strahlung erfolgen.

Der Sonnenbrand- oder UV-Index ist dabei ein Maß für die Wirksamkeit der Sonnenstrahlung einen Sonnenbrand(Erythem) hervorzurufen. Dieser Index erfaßt die biologisch wirksame UV-Strahlung in einem Zeitraum von 6 Stunden, und zwar zwischen 10 und 16 Uhr. Dies wird als Hauptaufenthaltszeitraum von Personen im Freien angesehen. Als Standardbewertungsgrundlage für den Sonnenbrandindex wird der Hautempfindlichkeitstyp II, nämlich der hellhäutige, europäische Typ mit häufigem Sonnenbrand und mäßiger Bräunung angesehen.

Der Sonnenbrand- bzw. UV-Index 10 z. B. bedeutet, daß bei einem empfindlichen Hauttyp 2 in weniger als einer halben Stunde ein Sonnenbrand eintreten kann und daß beim Aufenthalt in der Sonne ein Sonnenschutzmittel erforderlich ist. Mit einer einfachen derartigen Anzeige, z. B. UV=10 sind also die betreffenden Personen in der Lage, individuell, ohne weitere Kenntnis, Sonnencremes mit entsprechenden Lichtschutzfaktoren einzusetzen und die maximale Verweildauer in der Sonne abzuschätzen.

Vorteilhaft ist der Sensorkopf fest angeordnet und muß nicht nach der Sonne ausgerichtet werden, um exakte Meßwerte auch über den Tagesverlauf zu bestimmen. Mit der Einrichtung wird außerdem die Möglichkeit gegeben, über ein Tastaturenbedienfeld dem Nutzer interaktiv zu gestatten, Aussagen über die aktuelle Gefährdung durch die UV-Strahlung zu gewinnen und eine personengebundene Prognose über den sichersten Schutz vor einer Überdosis erythemwirksamer UV-Strahlung und die empfohlene maximale Verweildauer in der Sonne zu erstellen.

Die vorbeschriebene Einrichtung stellt demnach ein universelles, robustes und störunanfälliges Routinemeßgerät dar, das unter allen sommerlichen und winterlichen Witterungssituationen bei entsprechendem Sonnenschein im Freien zuverlässig arbeitet.

**Patentansprüche**

**1.** Einrichtung zur Bestimmung der UV-Strahlungsstärke und

- dosis mittels UV-empfindlicher Sensoren mit folgenden Merkmalen:

Anordnung der UV-Sensoren derart, daß die Flächennormalen der UV-Sensoren ein rechtwinkliges Koordinatensystem aufspannen, wobei die UV-Sensoren an den Seitenflächen eines Quaders oder Würfels im wesentlichen frei von einer Winkelabweichung befindlich sind und wobei die Seitenflächen des Quaders oder Würfels so gerichtet sind, daß deren Flächennormalen zu den Einheitsvektoren des Koordinatensystems parallel stehen zur strahlungswinkelunabhängigen vektoriellen Ermittlung der einfallenden UV-Strahlung, wobei weiterhin die Empfindlichkeit von als UV-empfindlichen Sensoren eingesetzten UV-Dioden in Abhängigkeit vom Strahlungseinfallswinkel gleich ist und einer Kosinus- oder Kosinus-Quadrat-Funktion entspricht sowie einem Steuerrechner als elektronisches Mittel zur Bestimmung der tatsächlichen erythemwirksamen Strahlung mittels vorgegebener Kalibrierung

**gekennzeichnet durch**

- stationsartigen säulenförmigen Aufbau mit einem Sensorkopf, enthaltend die Anordnung der UV-Sensoren, einem Großdisplay sowie einem langgestreckten Standfuß als Träger des Großdisplays und des Sensorkopfes, wobei im Standfuß Mittel zur interaktiven Kommunikation sowie zur zusätzlichen Datenausgabe sowie Mittel zum elektronischen Bewerten erhaltener Sensorsignale sowie der Ausgabe von Daten zum Betreiben des Großdisplays vorgesehen sind;
- Anordnung des Sensorkopfes oberhalb und beabstandet vom Großdisplay, jedoch mit diesem baulich verbunden, zur Gewährleistung eines freien ungestörten Strahlungseinfalles sowie Anordnung einer Stromversorgung zum autarken, netzfreien Betreiben der Einrichtung; und
- Kalibrierung und Normierung der erhaltenen UV-Strahlungsstärke und -dosismeßwerte auf einen Sonnenbrandoder UV-Index und Anzeige des Indexwertes über das Großdisplay, wobei eine im Spektralbereich > 340 nm sensitive Diode zur indirekten Bestimmung der atmosphärischen Trübungsanteile für die Kalibrierung vorgesehen ist.

2. Einrichtung nach Anspruch 1,
**dadurch gekennzeichnet, daß**
am Steuerrechner weitere Sensoren zur Bestimmung der Luft und/oder Wassertemperatur und/oder des Ozongehaltes angeschlossen sind.

3. Einrichtung nach einem der vorangegangenen Ansprüche,
**gekennzeichnet durch**
optische und/oder akustische Mittel zum Anzeigen des Überschreitens eines vorgegebenen Bestrahlungsstärke- oder -dosiswertes.

4. Einrichtung nach einem der vorangegangenen Ansprüche, **gekennzeichnet durch**
einen Mikrorechner zur Ermittlung eines Tendenzwertes zur Vorhersage der Strahlungsbelastung in folgenden Zeitabschnitten.

5. Einrichtung nach einem der vorangegangenen Ansprüche, **gekennzeichnet durch**
eine Eingabetastatur zur Eingabe des Hauttypes und/oder bereits verwendeter Sonnenschutzmittel zur individuellen Anzeige der Strahlungsbelastung und/oder der schädigungsfreien Zeit zum Fortsetzen oder Ausführen eines Sonnenbades unter den jeweiligen örtlichen Bedingungen.

6. Einrichtung nach einem der vorangegangenen Ansprüche, **gekennzeichnet durch**
einen ortsfesten oder mobilen Aufbau.

7. Einrichtung nach einem der vorangegangenen Ansprüche, **gekennzeichnet durch**
eine Stromversorgung **durch** mittels Solarzellen gepufferte Akkumulatoren.

8. Verwendung der Einrichtung nach einem der vorangegangenen Ansprüche,
an oder in öffentlichen Badeständen, Strandbädern, Kurhotels und Kliniken, Kreuzfahrtschiffen oder dergleichen zur Auswertung und Darstellung momentaner oder vorhergesagter UV-Belastung.

## Claims

1. Device for determining the strength and dose of ultraviolet radiation using sensors sensitive to ultraviolet radiation comprising the following features: arrangement of the ultraviolet sensors such that the normals to the surfaces of the ultraviolet sensors define a rectangular system of coordinates, wherein the ultraviolet sensors are disposed at the lateral faces of a cuboid or cube and are substantially free from an angular deviation and wherein the lateral faces of the cuboid or the cube are oriented such that the normals to the surfaces thereof are parallel to the basis vectors of the system of coordinates for the vectorial determination of the incident ultraviolet radiation independently of the angle of radiation, wherein further the sensitivity of ultraviolet diodes used as sensors sensitive to ultraviolet radiation is equal in response to the angle of incidence of the radiation and corresponds to a cosine or cosine-square function, and comprising a computer as electronic means for determining the actual erythema-effective radiation on the basis of predetermined calibration,
**characterized by**

- a station-like column-shaped structure having a sensor head, comprising the arrangement of the ultraviolet sensors, a large display and a long stretched out support foot as carrier for the large display and the sensor head, with means for the interactive communication and for the additional data output as well as with means for the electronic evaluation of received sensor signals and for the data output for operating the large display being provided in the support foot;
- an arrangement of the sensor head above and spaced apart from the large display, however, constructionally connected therewith, for guaranteeing a free undisturbed incidence of radiation as well as a power supply arrangement for the autarc network-free operation of the device; and
- calibration and normalization of the measured values of the strength and dose of the ultraviolet radiation obtained to a sunburn or ultraviolet index and display of the index value via the large display, with a diode sensitive in the spectral region > 340 nm for the indirect determination of the atmospheric dullness parts being provided for the calibration.

2. Device according to claim 1, **characterized in that** additional sensors for determining the air and/or water temperature and/or the ozone contents are connected to the computer.

3. Device according to one of the preceding claims, **characterized by** optical and/or acoustical means for indicating the exceeding of a predetermined strength or dose value of radiation.

4. Device according to one of the preceding claims, **characterized by** a microcomputer for determining a tendency value for the prediction of the radiation exposure degree in successive time periods.

5. Device according to one of the preceding claims, **characterized by** an input keyboard for inputting the type of skin and/or already used sun protectants for individually indicating the radiation exposure degree and/or the riskless time for continuing with or having a sunbath under the respective local conditions.

6. Device according to one of the preceding claims, **characterized by** a stationary or mobile construction.

7. Device according to one of the preceding claims, **characterized by** a power supply on the basis of accumulators buffered by solar cells.

8. Use of the device according to one of the preceding claims on or in public beaches, open air swimming pools, health resort hotels and hospitals, cruisers or the like for evaluating and displaying instantaneous or predicted ultraviolet radiation exposure.

**Revendications**

1. Système pour déterminer la quantité et la dose du rayonnement ultraviolet à l'aide de capteurs sensibles aux UV, comportant les éléments suivants :

   des capteurs UV agencés de telle manière que les normales aux surfaces des capteurs UV définissent un système de coordonnées rectangulaires, dans lequel les capteurs UV se trouvent sur les faces latérales d'un parallélépipède ou d'un cube et sensiblement exempts d'écart angulaire, lesdites faces latérales du parallélépipède ou du cube étant ainsi orientées que les normales à leurs surfaces sont parallèles aux vecteurs unitaires du système de coordonnées pour la détermination vectorielle et indépendante de l'angle de rayonnement du rayonnement UV incident, et dans lequel la sensibilité des diodes UV utilisées à titre de capteurs sensibles aux UV est égale en fonction de l'angle d'incidence du rayonnement et correspond à une fonction cosinus ou une fonction cosinus carré, et comprenant un calculateur de commande à titre de moyens électroniques pour déterminer le rayonnement réellement actif sur le plan érythème au moyen d'un calibrage prédéterminé,

   **caractérisé par** :

   - une structure en forme de colonne analogue à une station, avec une tête de capteur qui contient l'agencement des capteurs UV, un affichage de grande taille, ainsi qu'un pied de soutien allongé à titre de support pour l'affichage de grande taille et pour la tête de capteur, et dans le pied de soutien sont prévus des moyens pour la communication interactive ainsi que pour la sortie additionnelle de données, ainsi que des moyens pour l'évaluation électronique des signaux de capteur obtenus ainsi que pour la fourniture de données pour la gestion de l'affichage de grande taille ;
   - la tête de capteur est agencée au-dessus et à distance de l'affichage de grande taille, en étant cependant reliée à celui-ci sur le plan structurel, pour garantir une incidence libre et non perturbée du rayonnement, et agencement d'une alimentation électrique pour le fonctionnement du système en autarcie et indépendamment du réseau électrique ; et
   - calibrage et normalisation des valeurs concernant l'intensité et la dose du rayonnement UV obtenu à un indice de "coup de soleil", ou un indice UV, et affichage de la valeur de l'indice via l'affichage de grande taille, et dans lequel il est prévu pour le calibrage une diode sensible dans la plage spectrale supérieure à 340 nm, pour la détermination directe des parts de trouble atmosphérique.

**2.** Système selon la revendication 1, **caractérisé en ce que** d'autres capteurs pour la détermination de la température de l'air et/ou la température de l'eau et/ou la teneur en ozone sont raccordés au calculateur de commande.

**3.** Système selon l'une des revendications précédentes, **caractérisé par** des moyens optiques et/ou acoustiques pour indiquer le dépassement d'une valeur d'intensité ou de dose de rayonnement prédéterminée.

**4.** Système selon l'une des revendications précédentes, **caractérisé par** un micro-calculateur pour déterminer une valeur de tendance pour la prévision du rayonnement incident dans des intervalles temporels suivants.

**5.** Système selon l'une des revendications précédentes, **caractérisé par** un clavier de saisie pour la saisie du type de peau et/ou de l'agent de protection antisolaire utilisé, pour l'indication individuelle du rayonnement incident et/ou de la durée sans risques, pour la poursuite ou la pratique d'un bain de soleil sous les conditions locales respectives.

**6.** Système selon l'une des revendications précédentes, **caractérisé par** une réalisation stationnaire ou mobile.

**7.** Système selon l'une des revendications précédentes **caractérisé par** une alimentation électrique au moyen de cellules solaires avec accumulateur tampon.

**8.** Utilisation du système selon l'une des revendications précédentes sur ou dans des plages ouvertes au public, des baignades, des hôtels de cure ou des cliniques, des bateaux de croisière ou similaires, pour l'évaluation et la présentation du rayonnement UV momentané ou prévu.

n1,n2,n3 -Flächennormalen
der Dioden
I - Vektor des einfallenden
Lichtstromes

# Fig.1

Sensorkopf
(evtl. +ADU)

1

Steuerrechner
(SCC-Platine)

2

Stromversorgung
(Solar, akkugep.)

4

Drucker
(evtl.)

6

Display
(graph. LCD)

5

Tastatur
(Matrix 4x4)

3

7

Fig. 2

Fig.3

Fig. 4a

Fig. 4b